# EUROPÄISCHE PATENTANMELDUNG

(11) **EP 1 132 433 A2**
(43) Veröffentlichungstag der Anmeldung: **12.09.2001**
(21) Anmeldenummer: 01111301.6
(22) Anmeldetag: 08.12.1997
(51) Int. Cl.: C09B 62/20

(54) **Wasserlösliche faserreakive Farbstoffe, Verfahren zu ihrer Herstellung und ihre Verwendung**

(30) Priorität: 10.12.1996 DE 19651213
(62) Teilanmeldung aus: 97121539.7
(71) Anmelder: DyStar Textilfarben GmbH & Co. Deutschland KG, 60318 Frankfurt am Main (DE)
(72) Erfinder: Hansmann, Wilfried, 51381 Leverkusen (DE); Henk, Hermann, Dr., 55061 Köln (DE); Ehrenberg, Stefen, Dr., 60528 Frankfurt (DE); Reddig, Wolfram, Dr., 51373 Leverkusen (DE)

(57) **Zusammenfassung**

Es werden Farbstoffe beschrieben, die als faserreaktiven Rest den 5,6-Difluorpyrimidin-6-yl-Rest enthalten und zur Herstellung von farbstarken und echten Färbungen auf hydroxy- und/oder carbonamidgruppenhaltigen Materialien, insbesondere Fasermaterialien, wie beispielsweise Cellulosefasermaterialien, Wolle und synthetischem Polyamid, dienen.

## Beschreibung

Die Erfindung liegt auf dem technischen Gebiet der faserreaktiven Farbstoffe.

Die Praxis des Färbens mit faserreaktiven Farbstoffen führt weiterhin zu erhöhten Anforderungen an die Qualität der Färbungen und die Wirtschaftlichkeit des Färbeprozesses, weswegen neue faserreaktive Farbstoffe gewünscht werden, die verbesserte Eigenschaften, nicht nur gute Echtheiten, sondern auch einen hohen Fixiergrad auf dem zu färbenden Material aufweisen. So sind aus der Deutschen Offenlegungsschrift Nr. 4 122 100 und aus den U.S.-Patentschriften Nrs. 5 319 074, 5 340 928, 5 346 324 und 5 538 518 faserreaktive Farbstoffe bekannt, die einen 2,4-Difluorpyrimidin-6-yl-Rest als faserreaktive Komponente enthalten. Diese bekannten Farbstoffe sind wegen der angesprochenen gestiegenen Anforderungen insbesondere hinsichtlich ihres Fixiergrades und der Farbstärke der mit ihnen erhältlichen Färbungen und Drucke verbesserungswürdig.

Mit der vorliegenden Erfindung wurden neue faserreaktive Farbstoffe mit einem 5,6-Difluor-pyrimidin-4-yl-Rest als faserreaktive Gruppe gefunden, die der nachstehend definierten allgemeinen Formel (1)

Fb ― Zₙ (1)

entsprechen und sich gegenüber den bekannten Farbstoffen vorteilhaft unterscheiden und Färbungen und Drucke mit hoher Farbstärke liefern.

In der Formel (1) bedeuten:
- Fb: ist der Rest eines sulfogruppen-haltigen Formazan- oder, Kupferformazan-Farbstoffes;
- n: ist die Zahl 1, 2 oder 3, bevorzugt 1 oder 2, insbesondere bevorzugt 1;
- Z: ist eine Gruppe der allgemeinen Formel (2) 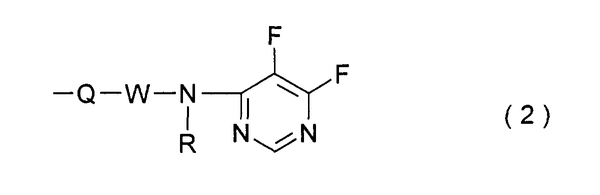 in welcher
- Q: eine kovalente Bindung oder eine Gruppe der Formel 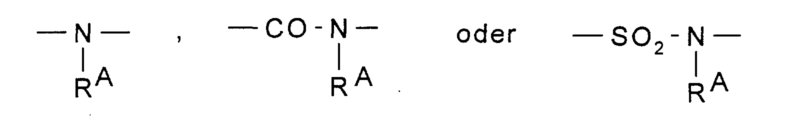 ist, bevorzugt eine Gruppe der Formel -N(R^{A})- oder eine kovalente Bindung, in welchen
R^{A} Wasserstoff oder Alkyl von 1 bis 4 C-Atomen, wie Methyl und Ethyl ist, das durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, wie Carbethoxy und Carbomethoxy, Carboxy, Sulfamoyl, Sulfo, Sulfato oder Phosphato substituiert sein kann, und bevorzugt Methyl oder Ethyl und insbesondere bevorzugt Wasserstoff ist,
- W: eine kovalente Bindung oder ein Brückenglied ist, wie beispielsweise ein geradkettiger oder verzweigter Alkylenrest von 1 bis 6 C-Atomen oder ein Alkylenrest von 2 bis 8 C-Atomen, der durch 1 oder 2 Heterogruppen aus der Gruppe -NH- , -N(R^{A})- mit R^{A} der obengenannten Bedeutung, -SO₂-, -CO-, -O- , -NH-SO₂- , -SO₂-NH- , -CO-NH- und -NH-CO- unterbrochen ist, oder ein gegebenenfalls substituierter Arylenrest oder ein gegebenenfalls substituierter Arylen-alkylen-Rest oder beispielsweise ein zwei Arylenreste enthaltender Rest, die über eine kovalente Bindung, eine Heterogruppe, wie -NH- oder -O- , oder einen Alkylenrest von 1 bis 4 C-Atomen oder einen olefinischen Rest von 2 bis 4 C-Atomen miteinander verbunden sind, oder beispielsweise der bivalente Rest eines Heterocyclus, wie eines Triazins, an den der bivalente Rest eines gegebenenfalls substituierten Phenylen-amino-, Naphthylen-amino-, Phenylenmethyl-amino- oder (C₁-C₆)-Alkylen-amino-Restes gebunden sein kann, wobei jedoch Q zwingend eine kovalente Bindung bedeutet, falls W für eine kovalente Bindung steht, und
wobei die Aminogruppen -N(R^{A})- und -N(R)- an ein C-Atom des Brückengliedes W oder an ein C-Atom eines Substituenten von W gebunden sind, und
- R: Wasserstoff oder Alkyl von 1 bis 4 C-Atomen, wie Methyl oder Ethyl, ist, das durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, wie Carbomethoxy und Carbethoxy, Carboxy, Sulfamoyl, Sulfo, Sulfato oder Phosphato substituiert sein kann, bevorzugt Methyl oder Ethyl und insbesondere bevorzugt Wasserstoff ist.
Arylenreste sind bevorzugt Phenylenreste, die substituiert sein können, wie beispielsweise durch einen oder zwei Substituenten aus der Gruppe Sulfo, Carboxy, Alkyl von 1 bis 4 C-Atomen, wie Ethyl und insbesondere Methyl, Alkoxy von 1 bis 4 C-Atomen, wie Ethoxy und insbesondere Methoxy, Chlor, Hydroxy und Alkanoylamino von 2 bis 4 C-Atomen, wie Propionylamino und Acetylamino, und Naphthylenreste, die substituiert sein können, wie beispielsweise durch 1, 2 oder 3 Sulfogruppen oder durch 1 oder 2 Carboxygruppen oder durch Alkyl von 1 bis 4 C-Atomen, wie Ethyl und Methyl, oder Alkoxy von 1 bis 4 C-Atomen, wie Ethoxy und Methoxy, oder durch zwei oder drei Substituenten aus der Gruppe Alkyl von 1 bis 4 C-Atomen, wie Ethyl und Methyl, Alkoxy von 1 bis 4 C-Atomen, wie Ethoxy und Methoxy, Sulfo und Carboxy.

Alkylenreste sind bevorzugt solche von 1 bis 4 C-Atomen.

Der Farbstoffrest Fb besitzt eine oder mehrere, wie 2 bis 6, Sulfogruppen. Der Rest Fb kann weitere bei organischen Farbstoffen übliche Substituenten enthalten. Solche Substituenten sind beispielsweise: Alkylgruppen von 1 bis 4 C-Atomen, wie Methyl, Ethyl, Propyl, Isopropyl oder Butyl, hiervon bevorzugt Ethyl und insbesondere Methyl; Alkoxygruppen von 1 bis 4 C-Atomen, wie Methoxy, Ethoxy, Propoxy, Isopropoxy und Butoxy, bevorzugt hiervon Ethoxy und insbesondere Methoxy; Alkanoylaminogruppen von 2 bis 5 C-Atomen, wie die Acetylamino- und Propionylaminogruppe; gegebenenfalls durch Sulfo, Carboxy, Methyl, Ethyl, Methoxy, Ethoxy und/oder Chlor substituierte Benzoylaminogruppen; primäre und mono- oder disubstituierte Aminogruppen, wobei die Substituenten beispielsweise Alkylgruppen von 1 bis 4 C-Atomen und/oder Phenylgruppen sind, wie Monoalkylamino- und Dialkylaminogruppen mit 1 bis 4 C-Atomen im Alkylrest, Phenylamino- oder N-(C₁-C₄-Alkyl)-N-phenylamino-Gruppen, wobei die Alkylreste noch substituiert sein können, beispielsweise durch Phenyl, Sulfophenyl, Hydroxy, Sulfato, Sulfo und Carboxy, und die Phenylgruppen noch substituiert sein können, wie durch Chlor, Sulfo, Carboxy, Methyl und/oder Methoxy, so beispielsweise Methylamino-, Ethylamino-, Propylamino-, Isopropylamino-, Butylamino-, N,N-Di-(β-hydroxyethyl)-amino-, N,N-Di-(β-sulfatoethyl)-amino-, Sulfobenzylamino-, N,N-Di(sulfobenzyl)-amino- und Diethylaminogruppen sowie Phenylamino- und Sulfophenylaminogruppen; Alkoxycarbonylgruppen mit einem Alkylrest von 1 bis 4 C-Atomen, wie Methoxycarbonyl und Ethoxycarbonyl; Alkylsulfonylgruppen von 1 bis 4 C-Atomen, wie Methylsulfonyl und Ethylsulfonyl; Trifluormethyl-, Nitro- und Cyanogruppen; Halogenatome, wie Fluor, Chlor und Brom; Carbamoylgruppen, die durch Alkyl von 1 bis 4 C-Atomen mono- und disubstituiert sein können, wobei die Alkylreste wiederum substituiert sein können, beispielsweise durch Hydroxy, Sulfato, Sulfo, Carboxy, Phenyl und Sulfophenyl, wie beispielsweise N-Methyl-carbamoyl und N-Ethyl-carbamoyl; Sulfamoylgruppen, die durch Alkylgruppen von 1 bis 4 C-Atomen mono- oder disubstituiert sein können, und N-Phenyl-N-alkyl-sulfamoylgruppen mit einer Alkylgruppe von 1 bis 4 C-Atomen, wobei diese Alkylgruppen wiederum durch Hydroxy, Sulfato, Sulfo, Carboxy, Phenyl und Sulfophenyl substituiert sein können, wie beispielsweise N-Methyl-sulfamoyl, N-Ethyl-sulfamoyl, N-Propyl-sulfamoyl, N-lsopropyl-sulfamoyl, N-Butyl-sulfamoyl, N-(ß-Hydroxyethyl)-sulfamoyl und N,N-Di-(β-hydroxyethyl)-sulfamoyl; N-Phenylsulfamoyl-, Ureido-, Hydroxy-, Carboxy-, Sulfomethyl- und Sulfogruppen. Der Farbstoffrest Fb kann weiterhin eine oder zwei faserreaktive Gruppen der allgemeinen Formel Y-SO₂-W^{o}- besitzen, in welcher W° einen Alkylenrest von 1 bis 4 C-Atomen oder eine Aminogruppe der Formel -N(CH₃)- oder -N(C₂H₅)-oder eine Gruppe der Formel -(C2-C4-alkylen)-NH- bedeutet oder für eine direkte kovalente Bindung steht und Y Vinyl ist oder β-Sulfatoethyl, β-Thiosulfatoethyl, β-Phosphatoethyl, β-(C₂-C₅-Alkanoyloxy)ethyl, wie β-Acetyloxyethyl, β-Benzoyloxyethyl, β-(Sulfobenzoyloxy)-ethyl, β-(p-Toluolsulfonyloxy)-ethyl oder β-Halogenoethyl, wie β-Bromethyl oder β-Chlorethyl ist, und bevorzugt Vinyl und insbesondere bevorzugt β-Chlorethyl oder β-Sulfatoethyl ist.

Brückenglieder W sind insbesondere 1,2-Ethylen, 1,3-Propylen, 1,4-Butylen, 1,2-Propylen, 1,3-Butylen, geradkettiges Alkylen von 2 bis 6 C-Atomen und verzweigtes Alkylen von 3 bis 6 C-Atomen, die jewels durch 1 oder 2 Heterogruppen unterbrochen sind, welche aus den Gruppen der Formeln -O-, -CO- , -SO₂- , -NH- , -N(R^{A})- mit R^{A} einer der obengenannten Bedeutungen, -NH-CO- , -CO-NH- , -SO₂-NH- oder -NH-SO₂- ausgewählt sind, Phenylen, das durch 1 oder 2 Substituenten aus der Gruppe Sulfo, Carboxy, Methyl, Ethyl, Methoxy und Ethoxy substituiert sein kann, wie beispielsweise Phen-1,3-ylen, Phen-1,4-ylen, 6-Sulfo-phen-1,3-ylen, 6-Sulfo-phen-1,4-ylen, 3,6-Disulfo-phen-1,4-ylen, 6-Methoxy-phen-1,3-ylen oder Benzyliden, das durch 1 oder 2 Substituenten aus der Gruppe Sulfo, Carboxy, Methyl, Ethyl, Methoxy und Ethoxy substituiert sein kann, wie beispielsweise 1,4-Benzyliden, 1,3-Benzyliden, 2-Sulfo-phen-1-yl-4-methylen, 2-Sulfo-phen-1-ylen-5-methylen und 2-Methoxyphen-1-yl-4-methylen, des weiteren der Rest des 1,1-Di-phen-4,4'-ylens, das in jedem Phenylenrest durch Methyl, Methoxy oder Sulfo substituiert sein kann, oder ist der 1,1'-Stilben-4,4'-ylen-Rest, der in jedem Phenylenrest durch Methyl, Methoxy oder Sulfo substituiert sein kann, weiterhin ein Rest derallgemeinen Formel (a) 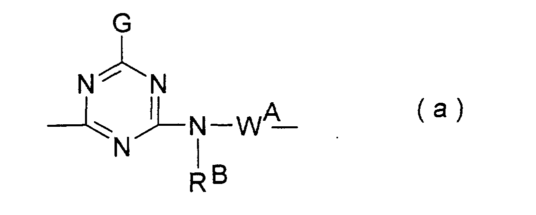 in welcher
- G: Fluor, Chlor, Brom, Cyanoamino, gegebenenfalls substituiertes Amino, Hydroxy, Alkoxy von 1 bis 4 C-Atomen, wie Methoxy und Ethoxy, Phenoxy, gegebenenfalls durch 1 oder 2 Substituenten aus der Gruppe Sulfo, Carboxy, Methyl, Ethyl, Methoxy und Ethoxy substituiertes Phenoxy oder Alkylthio von 1 bis 4 C-Atomen, wie Methylthio und Ethylthio, bevorzugt jedoch Chlor oder Fluor, ist,
- R^{B}: Wasserstoff oder Alkyl von 1 bis 4 C-Atomen, wie Methyl und Ethyl, ist, das durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, wie Carbethoxy und Carbomethoxy, Carboxy, Sulfamoyl, Sulfo, Sulfato oder Phosphato substituiert sein kann, und bevorzugt Methyl oder Ethyl und insbesondere bevorzugt Wasserstoff ist, und
- W^{A}: geradkettiges Alkylen von 2 bis 6 C-Atomen oder verzweigtes Alkylen von 3 bis 6 C-Atomen ist, die jeweils durch eine oder zwei Heterogruppen unterbrochen sein können, welche aus den Gruppen der Formeln -O-, -CO- , -SO₂-, -NH- , -N(R^{A}) mit R^{A} einer der obengenannten Bedeutungen, -NH-CO- , -CO-NH- , -SO₂-NH- oder -NH-SO₂- ausgewählt sind, oder Phenylen ist, das durch 1 oder 2 Substituenten aus der Gruppe Sulfo, Carboxy, Methyl, Ethyl, Methoxy und Ethoxy substituiert sein kann, wie beispielsweise Phen-1,3-ylen, Phen-1,4-ylen, 6-Sulfo-phen-1,3-ylen, 6-Sulfo-phen-1,4-ylen, 3,6-Disulfo-phen-1,4-ylen, 6-Methoxy-phen-1,3-ylen oder Benzyliden, das durch 1 oder 2 Substituenten aus der Gruppe Sulfo, Carboxy, Methyl, Ethyl, Methoxy und Ethoxy substituiert sein kann, wie beispielsweise 1,4-Benzyliden, 1,3-Benzyliden, 2-Sulfo-phen-1-yl-4-methylen, 2-Suldo-phen-1-yl-5-methylen oder 2-Methoxy-phen-1-yl-4-methylen.

In den vorstehenden und in den nachfolgenden allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Gruppen "Sulfo", "Thiosulfato", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M , Thiosulfatogruppen Gruppen entsprechend der allgemeinen Formel -S-SO₃M , Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M , in welchen
- M: Wasserstoff oder ein Alkalimetall, wie Natrium, Kalium oder Lithium, oder das Moläquivalent eines Erdalkalimetalls, wie des Calciums, und bevorzugt Wasserstoff oder ein Alkalimetall ist.

Erfindungsgemäße Kupferformazanfarbstoffe sind insbesondere diejenigen, die der allgemeinen Formel (14) 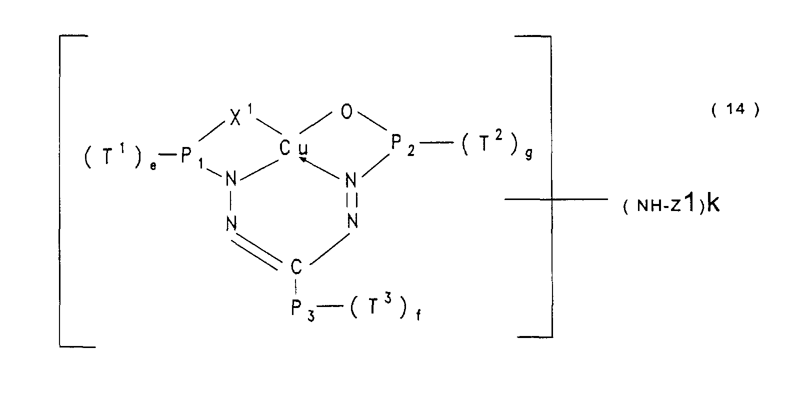 entsprechen, in welcher bedeuten:
- Z¹: ist ein Rest der obengenannten und definierten allgemeinen Formel (2a) 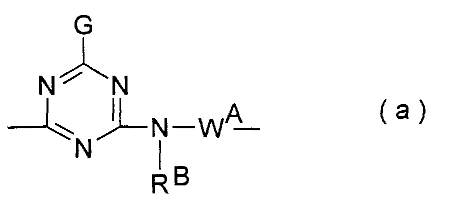 in welcher
- G: Fluor, Chlor, Brom, Cyanoamino, gegebenenfalls substituiertes Amino, Hydroxy, Alkoxy von 1 bis 4 C-Atomen, wie Methoxy und Ethoxy, Phenoxy, gegebenenfalls durch 1 oder 2 Substituenten aus der Gruppe Sulfo, Carboxy, Methyl, Ethyl, Methoxy und Ethoxy substituiertes Phenoxy oder Alkylthio von 1 bis 4 C-Atomen, wie Methylthio und Ethylthio, bevorzugt jedoch Chlor oder Fluor, ist,
- R^{B}: Wasserstoff oder Alkyl von 1 bis 4 C-Atomen, wie Methyl und Ethyl, ist, das durch Halogen, wie Chlor und Brom, Hydroxy, Cyano, Alkoxy von 1 bis 4 C-Atomen, wie Methoxy und Ethoxy, Alkoxycarbonyl von 2 bis 5 C-Atomen, wie Carbethoxy und Carbomethoxy, Carboxy, Sulfamoyl, Sulfo, Sulfato oder Phosphato substituiert sein kann, und bevorzugt Methyl oder Ethyl und insbesondere bevorzugt Wasserstoff ist, und
- W^{A}: geradkettiges Alkylen von 2 bis 6 C-Atomen oder verzweigtes Alkylen von 3 bis 6 C-Atomen ist, die jeweils durch eine oder zwei Heterogruppen unterbrochen sein können, welche aus den Gruppen der Formeln -O-, -CO- , -SO₂-, -NH- , -N(R^{A}) mit R^{A} einer der obengenannten Bedeutungen, -NH-CO- , -CO-NH- , -SO₂-NH- oder -NH-SO₂-ausgewählt sind, oder Phenylen ist, das durch 1 oder 2 Substituenten aus der Gruppe Sulfo, Carboxy, Methyl, Ethyl, Methoxy und Ethoxy substituiert sein kann, wie beispielsweise Phen-1,3-ylen, Phen-1,4-ylen, 6-Sulfo-phen-1,3-ylen, 6-Sulfo-phen-1,4-ylen, 3,6-Disulfo-phen-1,4-ylen, 6-Methoxy-phen-1,3-ylen oder Benzyliden, das durch 1 oder 2 Substituenten aus der Gruppe Sulfo, Carboxy, Methyl, Ethyl, Methoxy und Ethoxy substituiert sein kann, wie beispielsweise 1,4-Benzyliden, 1,3-Benzyliden, 2-Sulfo-phen-1-yl-4-methylen, 2-Suldo-phen-1-yl-5-methylen oder 2-Methoxy-phen-1-yl-4-methylen, oder oder der 5,6-Difluor-pyrimidin-4-yl-Rest;
- X¹: ist ein Sauerstoffatom oder bevorzugt die Carbonyloxygruppe der Formel -COO- ;
- P₁ und P₂: bedeuten, unabhängig voneinander, jedes einen Benzol- oder Naphthalinring, wobei an P₁ das Stickstoffatom und die Gruppe X¹ ortho-ständig zueinander und an P₂ das Sauerstoffatom und das Stickstoffatom ortho-ständig zueinander gebunden sind und die Benzolkerne bzw. Napthalinkerne noch durch einen oder zwei Substituenten aus der Gruppe Halogen, wie Chlor, Nitro, Alkyl von 1 bis 4 C-Atomen, wie Methyl und Ethyl, Alkoxy von 1 bis 4 C-Atomen, wie Methoxy und Ethoxy, Sulfamoyl, durch Alkyl von 1 bis 4 C-Atomen mono- oder disubstituiertes Sulfamoyl, Alkylsulfonyl von 1 bis 4 C-Atomen, wie Methylsulfonyl und Ethylsulfonyl, und Phenylsulfonyl substituiert sein können, wobei sowohl P₁ als auch P₂ beide bevorzugt einen Benzolring bedeuten;
- P3: ist eine geradkettige oder verzweigte Alkylengruppe von 2 bis 6 C-Atomen, vorzugsweise von 2 bis 4 C-Atomen, die durch eine Sulfophenylgruppe substituiert sein kann, oder ist eine Phenylengruppe oder eine Naphthylengruppe, die durch 1 oder 2 Substituenten aus der Gruppe Methyl, Ethyl, Methoxy, Ethoxy und Chlor substituiert sein können, wobei P₃ bevorzugt ein Benzolring ist;
- T¹, T² und T³: bedeuten, unabhängig voneinander, jedes eine Sulfo- oder Carboxygruppe, bevorzugt Sulfogruppe;
- e, f und g: stellen, unabhängig voneinander, jedes die Zahl Null, 1 oder 2 dar, wobei die Summe von (e+f+g) eine ganze Zahl von 1 bis 4 bedeutet und vorzugsweise 2 oder 3, insbesondere 2, ist, wobei im Falle von e oder f oder g gleich Null die Gruppe T¹ bzw. T² bzw. T³ ein Wasserstoffatom bedeutet;
- k: steht für die Zahl 1 oder 2, bevorzugt 1, wobei die Gruppe -NH-Z¹ an einen aromatischen Rest von P₁, P₂ oder P₃ gebunden sein kann und bevorzugt an P₂ gebunden ist.

Bevorzugt sind von den Kupferformazanfarbstoffen der allgemeinen Formel (14) diejenigen, in welchen P₁ und P₂ beide für einen Benzolring stehen, die Gruppe -NH-Z¹ an P₂ gebunden ist und T¹ und T² jedes eine Sulfogruppe bedeutet, wobei e und g beide für die Zahl 1 stehen. Sofern die Gruppe -NH-Z¹ an P₁ gebunden ist, ist e die Zahl Null, g die Zahl 2 und T² eine Sulfogruppe. Bevorzugt ist weiterhin die Gruppierung -P₃-(T³)_{f} der Phenyl- oder ein 2- oder 4-Sulfo-phenyl-Rest.

Hiervon sind insbesondere diejenigen Kupferformazan-Farbstoffe hervorzuheben, die der allgemeinen Formel (14a) 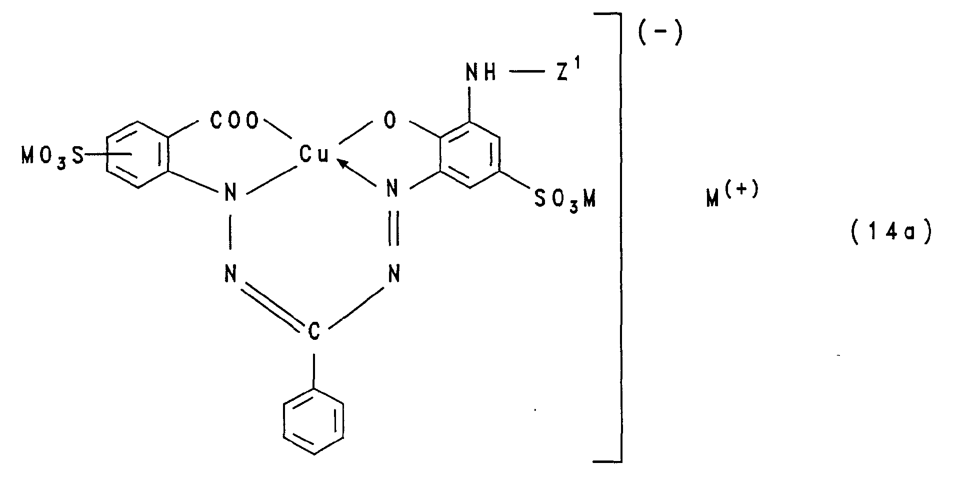 entsprechen, in welcher M und Z¹ die obengenannte, insbesondere bevorzugten Bedeutungen haben.

Die vorliegende Erfindung betrifft weiterhin Verfahren zur Herstellung der erfindungsgemäßen Farbstoffe der allgemeinen Formel (1). Sie lassen sich in an und für sich in üblicher Weise analog bekannten, für die jeweilige Farbstoffklasse spezifischen Synthesewegen herstellen, indem man für den jeweiligen Farbstoff typische Vorprodukte, von denen mindestens eines eine oder zwei Gruppen der allgemeinen Formel (2) enthält, miteinander umsetzt, oder indem man eine Verbindung der allgemeinen Formel (20) 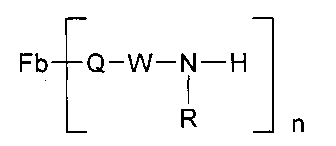 mit Fb, R, Q, W und n der obengenannten Bedeutungen in äquivalenter Menge mit 4,5,6-Trifluor-pyrimidin umsetzt, oder indem man eine Verbindung der allgemeinen Formel Fb-N(R^{A})H mit Fb und R^{A} der obengenannten Bedeutung mit einer Verbindung der allgemeinen Formel (21) 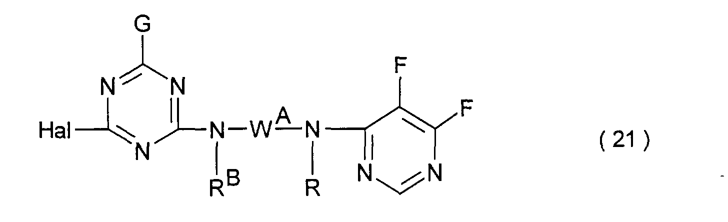 in welcher Hal für Halogen, wie Fluor und Chlor, steht und G, R^{B}, W^{A} und R die obengenannten Bedeutungen haben, umsetzt, oder indem man eine Verbindung der allgemeinen Formel (22) 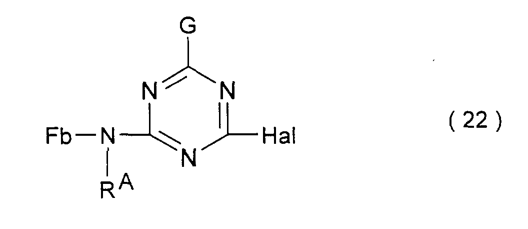 mit Fb, R^{A}, G und Hal der obengenannten Bedeutung mit einer Verbindung der allgemeinen Formel (23) 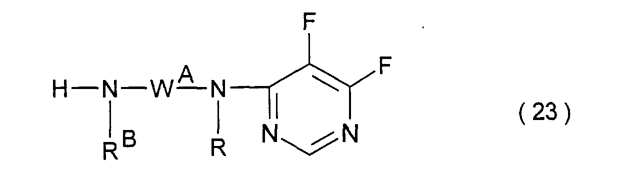 mit R^{B}, W^{A} und R der obengenannten Bedeutung umsetzt.

Bei den Kondensationsreaktionen ist darauf zu achten, daß die faserreaktiven Gruppierungen im alkalischen Bereich nicht geschädigt werden.

Die Umsetzungen der Ausgangsverbindungen erfolgen im wäßrigen oder wäßrig-organischen Medium in Suspension oder Lösung. Führt man die Umsetzungen in einem wäßrig-organischen Medium durch, so ist das organische Medium beispielsweise Aceton, Dimethylformamid, Dimethylsulfoxid oder N-Methylpyrrolidon. Vorteilhaft wird der bei der Kondensation freiwerdende Halogenwasserstoff laufend durch Zugabe wäßriger Alkali- oder Erdalkalihydroxide, -carbonate oder -bicarbonate neutralisiert. Die Kondensationsreaktion des 4,5,6-Trifluor-pyrimidins erfolgt in der Regel bei einer Temperatur zwischen -5°C und + 50°C, bevorzugt bei einer Temperatur zwischen 0°C und +40°C, und bei einem pH-Wert zwischen 2 und 11, bevorzugt zwischen 4 und 10.

Die Umsetzung der Ausgangsverbindungen der allgemeinen Formel Fb-N(R^{A})H und der allgemeinen Formel (21) erfolgt in der Regel bei einer Temperatur zwischen -5°C und + 60°C, im Falle von Hal gleich Fluor bevorzugt bei einer Temperatur zwischen 0°C und 30°C, und bei einem pH-Wert zwischen 3 und 10, bevorzugt zwischen 6 und 9.
Die Umsetzung der Verbindungen der allgemeinen Formeln (22) und (23) erfolgt in der Regel bei einer Temperatur zwischen -5°C und + 30°C, im Falle von Hal gleich Fluor bevorzugt bei einer Temperatur zwischen 0°C und 30°C, und bei einem pH-Wert zwischen 3 und 10, bevorzugt zwischen 6 und 9.

Die Ausgangsverbindungen Fb-N(R^{A})H bzw. der allgemeinen Formel (20) und deren Vorprodukte sind allgemein bekannt und in der Literatur zahlreich beschrieben.

Die Ausgangsverbindung der allgemeinen Formel (21) und (23) lassen sich in an und für sich üblicher und bekannter Weise durch Umsetzung eines durch den Substituenten G substituierten Dihalogeno-s-triazins mit einem Amin der allgemeinen Formel -H(R^{B})N-W^{A}-N(R)H und anschließend mit 4,5,6-Trifluorpyrimidin bzw. durch Umsetzung dieser Diaminoverbindung mit 4,5,6-Trifluor-pyrimidin herstellen. Analog gewinnt man nach an und für sich bekannten Verfahrensweisen die Ausgangsverbindung der allgemeinen Formel (22) durch Umsetzung einer Verbindung der allgemeinen Formel Fb-N(R^{A})H der obengenannten Bedeutung mit einem durch den Substituenten G substituierten Dihalogeno-s-triazin.
Die Abscheidung der erfindungsgemäß hergestellten Farbstoffe der allgemeinen Formel (1) aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugeführt werden kann.
Die Farbstoffe der allgemeinen Formel (1) - im nachfolgenden Farbstoffe (1) genannt - eignen sich zum Färben (was das Bedrucken einschließt) der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürlichen Cellulosefasern, wie Baumwolle, Leinen und Hanf, sowie Zellstoff und regenerierte Cellulose. Die Farbstoffe (1) sind auch zum Färben oder Bedrucken von hydroxygruppenhaltigen Fasern geeignet, die in Mischgeweben enthalten sind, z.B. von Gemischen aus Baumwolle mit Polyesterfasern oder Polyamidfasern.

Die Farbstoffe (1) lassen sich auf verschiedene Weise auf das Fasermaterial applizieren und auf der Faser fixieren, insbesondere in Form von wäßrigen Farbstofflösungen und -druckpasten. Sie eignen sich sowohl für das Ausziehverfahren als auch zum Färben nach dem Foulard-Färbeverfahren, wonach die Ware mit wäßrigen, gegebenenfalls salzhaltigen Farbstofflösungen imprägniert und der Farbstoff nach einer Alkalibehandlung oder in Gegenwart von Alkali, gegebenenfalls unter Wärmeeinwirkung, fixiert wird. Diese Färbe- und Druckverfahren sind zahlreich in der allgemeinen Fachliteratur wie auch in der Patentliteratur, wie beispielsweise in den anfangs genannten Druckschriften, beschrieben.

Gegenstand der vorliegenden Erfindung ist deshalb auch die Verwendung der Farbstoffe (1) zum Färben (einschließlich des Bedrucken) dieser Materialien bzw. Verfahren zum Färben (und Bedrucken) solcher Materialien in an und für sich üblicher Verfahrensweise, bei welchen ein Farbstoff (1) als Farbmittel eingesetzt wird, indem man den Farbstoff (1) im wäßrigen Medium auf das Material appliziert und ihn mittels Wärme oder mittels einer alkalisch wirkenden Verbindung oder mittels beidem auf dem Material fixiert.

Die Farbstoffe (1) zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d.h. der Seifverlust sehr gering ist. Die Farbstoffe (1) eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Des weiteren zeichnen sich die erfindungsgemäßen Farbstoffe (1) darin aus, daß nach dem Färbeprozeß auf dem Fasermaterial nicht fixierte Farbstoffanteile sich sehr leicht auswaschen lassen, ohne daß Weißwäsche, die sich mit in dem Waschprozeß befindet, durch den sich ablösenden Farbstoff angeschmutzt wird. Hieraus ergeben sich Vorteile für den Färbeprozeß; Waschzyklen und damit Kosten werden eingespart.

Die mit den Farbstoffen (1) hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Naßechtheitseigenschaften, wie Wasch-, Wasser-, Seewasser-, Ueberfärbe- und Schweißechtheiten, sowie eine gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 134

In 560 Teile einer wäßrigen Suspension von 54,5 Teilen N-(2-Carboxy-5-sulfophenyl)-N'-(2'-hydroxy-3'-amino-5'-sulfo-phenyl)-ms-phenylformazan rührt man unter Einhaltung eines pH-Wertes von 7,0 bis 7,5 bei 25°C 5,3 Vol.-Teile 4,5,6-Trifluoropyrimidin ein und rührt die Reaktionsmischung sodann bei diesem pH-Bereich bei einer Temperatur von 40°C noch mehrere Stunden weiter. Die Syntheselösung wird anschließend mittels Aktivkohle und einem Filtrierhilfsmittel in üblicher Weise geklärt.

Der erfindungsgemäße Kupferformazanfarbstoff der Formel (in Form der freien Säure geschrieben) 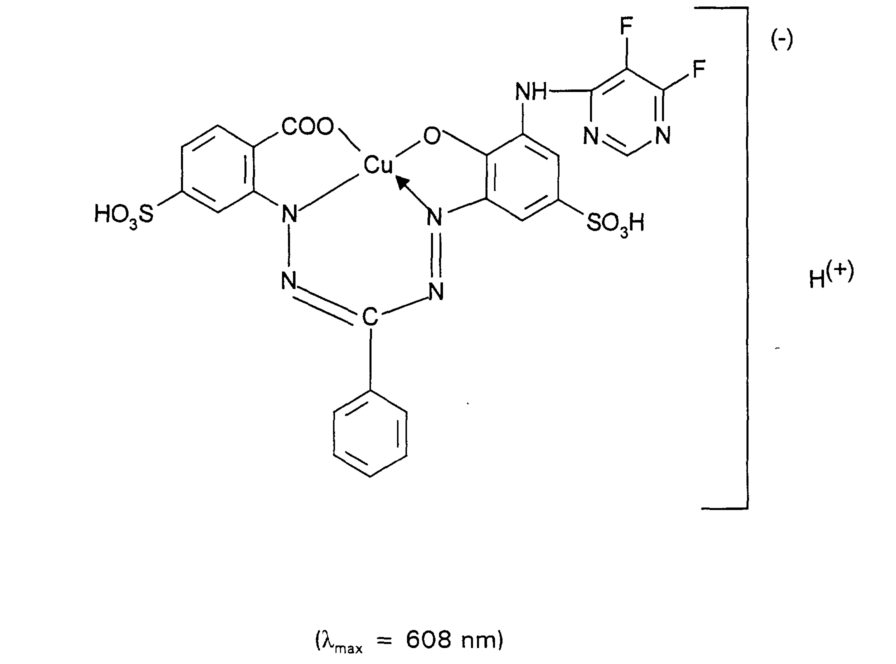 wird aus der Syntheselösung durch Natriumchlorid ausgesalzen. Er färbt beispielsweise Baumwolle nach den in der Technik für faserreaktive Farbstoffe üblichen Färbeweisen in farbstarken, blauen Tönen mit guten Echtheiten.

### Beispiel 145

302 Teile 2-Brom-1-amino-naphthalin-4-sulfonsäure werden in 2000 Teilen Wasser gelöst, in üblicher Weise diazotiert und in eine Suspension von 467,5 Teilen 6-(4',5'-Difluor-pyrimidin-6'-yl)-amino-4,8-disulfo-1-hydroxy-naphthalin in 3500 Teilen Wasser unter kräftigem Rühren zufließen lassen, wobei man gleichzeitig mit einer 20 %igen wäßrigen Natriumcarbonatlösung (etwa 800 Teile) ein pH-Bereich zwischen 7 und 8 aufrecht hält.
Die erhaltene Suspension des roten Kupplungsproduktes wird langsam unter Aufrechterhaltung eines pH-Wertes zwischen 7 und 8 mit 275 Teilen 2-Aminobenzoesäure und danach mit 1380 Teilen einer 18 %igen wäßrigen Kupfersulfatlösung versetzt. Man rührt noch einige Stunden nach, filtriert die Reaktionslösung und isoliert den erfindungsgemäßen Kupferformazanfarbstoff der Formel (in Form der freien Säure geschrieben) 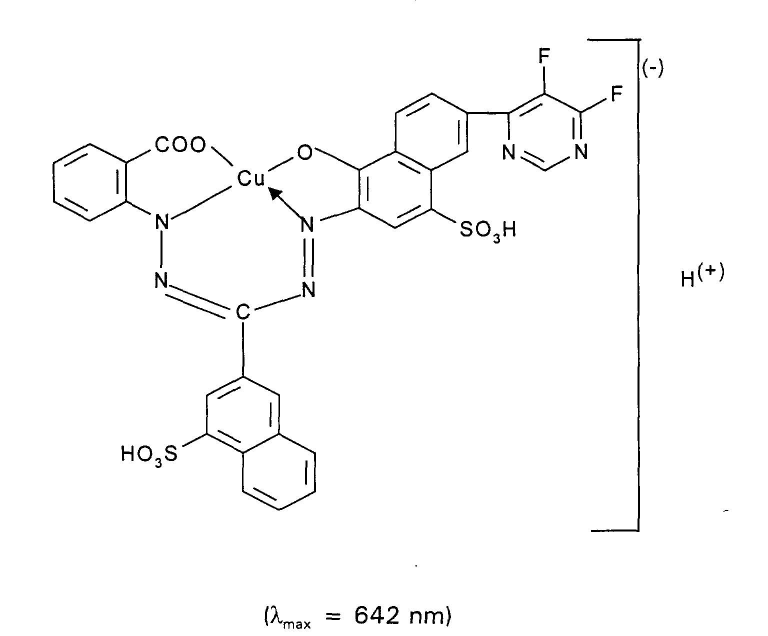 durch Aussalzen als Alkalimetallsalz (Natriumsalz). Der Farbstoff zeigt gute färberische Eigenschaften und liefert beispielsweise auf Cellulosefasermaterialien, wie Baumwolle, farbstarke grüne Färbungen und
Drucke von sehr hohen Echtheiten.

## Patentansprüche

**1.** Farbstoff entsprechend der allgemeinen Formel (1)
Fb ― Zₙ (1)
in welcher bedeuten:
Fb ist der Rest eines sulfogruppenhaltigen Formazan-, Kupferformazan-Farbstoffes;
n ist die Zahl 1, 2 oder 3;
Z ist eine Gruppe der allgemeinen Formel (2) 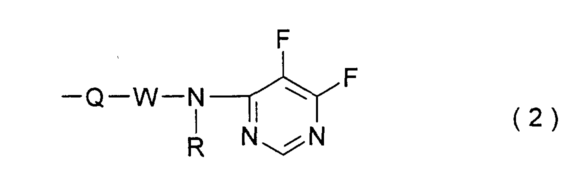 in welcher
Q eine kovalente Bindung oder eine Gruppe der Formel 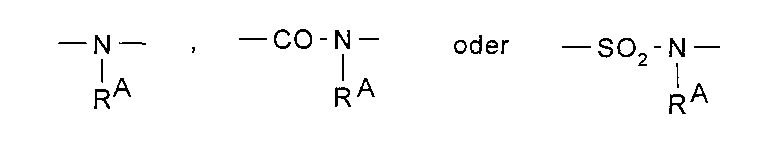 ist, in welchen
R^{A} Wasserstoff oder Alkyl von 1 bis 4 C-Atomen ist, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo, Sulfato oder Phosphato substituiert sein kann,
W eine kovalente Bindung oder ein Brückenglied ist, wobei jedoch Q zwingend eine kovalente Bindung bedeutet, falls W für eine kovalene Bindung steht und wobei die Aminogruppen -N(R^{A})- und -N(R)- an ein C-Atom des Brückengliedes W oder an ein C-Atom eines Substituenten von W gebunden sind, und
R Wasserstoff oder Alkyl von 1 bis 4 C-Atomen ist, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo, Sulfato oder Phosphato substituiert sein kann.

**2.** Farbstoff nach Anspruch 1, **dadurch gekennzeichnet, daß** Fb der Rest eines Kupferformazan-Farbstoffes ist.

**3.** Farbstoff nach mindestens einem der Ansprüche 1 oder 2, **dadurch gekennzeichnet, daß** Q eine direkte Bindung oder eine Gruppe der Formel -N(R^{A})- ist.

**4.** Farbstoff nach Anspruch 3, **dadurch gekennzeichnet, daß** R^{A} Wasserstoff ist.

**5.** Farbstoff nach mindestens einem der Ansprüche 1 bis 4, **dadurch gekennzeichnet, daß** n die Zahl 1 ist.

**6.** Farbstoff nach mindestens einem der Ansprüche 1 bis 5, **dadurch gekennzeichnet, daß** R Wasserstoff ist.

**7.** Farbstoff nach mindestens einem der Ansprüche 1 bis 6, **dadurch gekennzeichnet, daß** Q und W beide eine kovalente Bindung darstellen.

**8.** Farbstoff nach einem oder mehreren der Ansprüche 1 bis 7, **dadurch gekennzeichnet, daß** W geradkettiges oder verzweigtes Alkylen von 1 bis 6 C-Atomen ist oder Alkylen von 2 bis 8 C-Atomen ist, das durch 1 oder 2 Heterogruppen aus der Gruppe -NH- , -N(R^{A})- mit R^{A} der in Anspruch 1 genannten Bedeutung, -SO₂-, -CO- , -O- , -NH-SO₂-, -SO₂-NH-, -CO-NH- und -NH-CO- unterbrochen ist, oder gegebenenfalls substituiertes Arylen oder gegebenenfalls substituiertes Arylen-alkylen oder ein zwei Arylenreste enthaltender Rest ist, dessen Arylenreste über eine kovalente Bindung, eine Heterogruppe oder einen Alkylenrest von 1 bis 4 C-Atomen oder einen olefinischen Rest von 2 bis 4 C-Atomen miteinander verbunden sind, oder der bivalente Rest eines Heterocyclus ist, an den der bivalente Rest eines gegebenenfalls substituierten Phenylen-amino-, Phenylen-methylen-amino-, Naphthylen-amino- oder (C₁-C₆)-Alkylen-amino-Restes gebunden sein kann.

**9.** Farbstoff nach Anspruch 8, **dadurch gekennzeichnet, daß** W ein Rest der allgemeinen Formel (a) 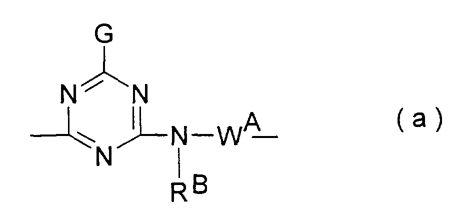 ist, in welcher
G Fluor, Chlor, Brom, Cyanoamino, gegebenenfalls substituiertes Amino, Hydroxy, Alkoxy von 1 bis 4 C-Atomen, Phenoxy, gegebenenfalls durch 1 oder 2 Substituenten aus der Gruppe Sulfo, Carboxy, Methyl, Ethyl, Methoxy und Ethoxy substituiertes Phenoxy oder Alkylthio von 1 bis 4 C-Atomen ist,
R^{B} Wasserstoff oder Alkyl von 1 bis 4 C-Atomen ist, das durch Halogen, Hydroxy, Cyano, Alkoxy von 1 bis 4 C-Atomen, Alkoxycarbonyl von 2 bis 5 C-Atomen, Carboxy, Sulfamoyl, Sulfo, Sulfato oder Phosphato substituiert sein kann, und
W^{A} geradkettiges Alkylen von 2 bis 6 C-Atomen oder verzweigtes Alkylen von 3 bis 6 C-Atomen ist, die jeweils durch eine oder zwei Heterogruppen unterbrochen sind, welche aus den Gruppen der Formeln -O- , -CO- , -SO₂-, -NH- , -N(R^{A}) mit R^{A} einer der in Anspruch 1 genannten Bedeutungen, -NH-CO- , -CO-NH- , -SO₂-NH- oder -NH-SO₂- ausgewählt sind, oder Phenylen ist, das durch 1 oder 2 Substituenten aus der Gruppe Sulfo, Carboxy, Methyl, Ethyl, Methoxy und Ethoxy substituiert sein kann.

**10.** Verfahren zur Herstellung eines Farbstoffes der allgemeinen Formel (1) von Anspruch 1, **dadurch gekennzeichnet, daß** man für den jeweiligen Farbstoff typische Vorprodukte, von denen mindestens eines eine oder zwei Gruppen der allgemeinen Formel (2) enthält, miteinander umsetzt, oder daß man eine Verbindung der allgemeinen Formel (20) 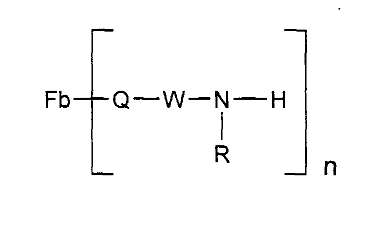 mit Fb, Q, W, R und n der in Anspruch1 genannten Bedeutung in äquivalenter Menge mit 4,5,6-Trifluor-pyrimidin umsetzt, oder daß man eine Verbindung der allgemeinen Formel Fb-N(R^{A})H mit Fb und R^{A} der obengenannten Bedeutung mit einer Verbindung der allgemeinen Formel (21) 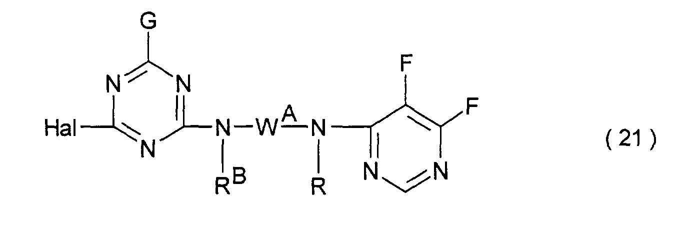 in welcher Hal für Halogen steht und G, R^{B}, W^{A} und R die obengenannten Bedeutungen haben, umsetzt, oder daß man eine Verbindung der allgemeinen Formel (22) 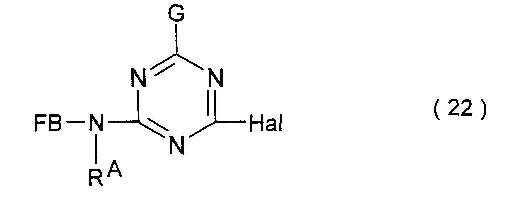 mit Fb, R^{A}, G und Hal der obengenannten Bedeutung mit einer Verbindung der allgemeinen Formel (23) 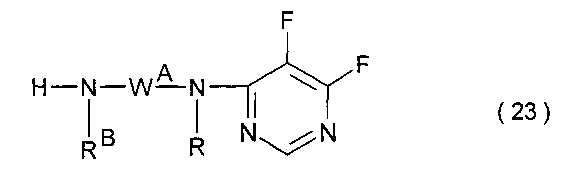 mit R⁸, W^{A} und R der obengenannten Bedeutung umsetzt.

**10.** Verwendung eines Farbstoffes von Anspruch 1 oder eines nach Anspruch 9 hergestellten Farbstoffes zum Färben von hydroxy- und/oder carbonamidgruppenhaltigem Material, insbesondere Fasermaterial.

**11.** Verfahren zum Färben von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, **dadurch gekennzeichnet, daß** man als Farbstoff einen Farbstoff von Anspruch 1 oder einen nach Anspruch 9 hergestellten Farbstoff einsetzt.
